# EUROPEAN PATENT APPLICATION

(11) **EP 2 996 089 A1**
(43) Date of publication of application: **16.03.2016**
(21) Application number: 15159750.7
(22) Date of filing: 18.03.2015
(51) Int. Cl.: G06T 19/20

(54) **Method for displaying 2d image and 3d image of same decoration scene simultaneously on single interface**

(30) Priority: 05.09.2014 CN 201410453809
(71) Applicant: Beijing Eryiju Technology Co., Ltd, Dongdan Beijing (CN)
(72) Inventor: Yao, Jin, Dongdan (CN); Liu, Rujia, Dongdan (CN); He, Decai, Dongdan (CN); Bai, Kun, Dongdan (CN); Li, Hao, Dongdan (CN); Wang, Bo, Dongdan (CN); Zhang, Xingnan, Dongdan (CN); Fang, Xin, Dongdan (CN)
(74) Representative: Berkkam, Ayfer

(57) **Abstract**

The present invention discloses a method for displaying a 2D image and a 3D image of a same decoration scene simultaneously on a single interface, including: when a decoration scene is displayed on an interface of an electronic display device, an operationally changeable 2D image is displayed, and a 3D image of the 2D image is displayed on the same interface, changed with an operational change of the 2D image. The 2D image is a transparent image and located at a front side of the same interface, and the 3D image is a nontransparent image and located at a back side of the same interface, such that the 3D image is displayed by penetrating through the 2D image. The difference of the designing method of the present invention from the conventional methods lies in that: in the conventional methods, furniture may only be accurately placed in a 2D interface, and the stereo effect needs to be adjusted in a 3D interface, which is complicated in operation and cannot be displayed intuitively, while in the present invention, it is realized that the operation would be performed in two interfaces may be completed in one page, therefore, it has a significant promotion value.

## Description

### TECHNICAL FIELD

The present invention generally relates to the field of decoration design, and particularly to a method for displaying a 2D image and a 3D image of a same decoration scene simultaneously on a single interface.

### BACKGROUND

Nowadays, with the improvement of their living standards, users are getting even more discerning about decoration design and design effects, whether it be a household design or an office design. Dedicated design software is essential for designers, through which the designers may design various exquisite decoration effects for users' reference according to a practical site to be decorated. There are generally two kinds of design. One is flat layout design, which generates a 2D flat layout diagram merely in a form of lines of a site to be decorated. Although the design diagram may display a design scheme intuitively, the stereo effect is not acquirable to the users, so the user may only perceive which part of the design scheme is satisfying or not. The other one is three-dimensional design, through software such as 3DMAX that is currently popular, which displays a design scheme in layered 3D images for the user to easily perceive a stereo effect diagram of the decoration therefrom, therefore, most users generally have preference to the three-dimensional design. However, in most design software, flat layout and three-dimensional design can only be designed in two kinds of operational software. For example, for a flat layout diagram designed through software A provided by the user, a three-dimensional stereo effect diagram may only be obtained through software B. On the other hand, with a three-dimensional stereo effect diagram designed through software B, flat layout thereof may be only operated through software A. They are not compatible to be displayed or designed on a same interface of one kind of software. Although there are some advanced kinds of three-dimensional design software which allows designing in flat layout and displaying in stereo effect, they have a drawback in that, both of the flat layout and the stereo effect cannot coexist on a same interface. That is, typically, three-dimensional stereo effect cannot be presented in designing flat layout of furniture, and location of an object cannot be positioned accurately in adjusting a three-dimensional stereo. So it is difficult to directly achieve the effects desired by the user during the operation.

### SUMMARY

To overcome the above defects, a method for displaying a 2D image and a 3D image of a same decoration scene simultaneously on a single interface is provided by the present invention, in which it is realized a two-dimensional flat layout and a three-dimensional stereo effect may be displayed simultaneously, such that when the 2D image is operationally changed, the 3D image may be changed and adjusted with it. Therefore, in viewing a change in a flat layout. the user may intuitively perceive a three-dimensional effect adjusted with it.

The technical solutions provided by the present invention are as follows.

A method for displaying a 2D image and a 3D image of a same decoration scene simultaneously on a single interface, including:

when a decoration scene is displayed on an interface of an electronic display device, an operationally changeable 2D image is displayed, and a 3D image of the 2D image is displayed on the same interface, changed with an operational change of the 2D image.

Preferably, the 2D image is a transparent image and located at a front side of the same interface, and the 3D image is a nontransparent image and located at a back side of the same interface, such that the 3D image is displayed by penetrating through the 2D image.

Preferably, the operational change of the 2D image mentioned in the above method includes: changing an up-and-down distance, a left-and-right distance or a front-and-back distance between objects in the 2D image; changing a height, a width or a depth of an object in the 2D image; changing a rotation angle of an object in the 2D image, and then the operational change may be displayed immediately in the corresponding 3D image.

Preferably, the method of changing an up-and-down distance, a left-and-right distance or a front-and-back distance between objects in the 2D image includes: by clicking a move button, along a longitudinal coordinate of the 2D image, a round button therein is dragged to change a position of a selected object, or the position of the object is directly changed by inputting a value after the object is selected;

the method of changing a height, a width or a depth of an object in the 2D image includes: by clicking a modify button, along a longitudinal coordinate of the 2D image, a round button therein is dragged to change a size of a selected object, or the size of the object is directly changed by inputting a value after one object or some objects are selected; and

the method of changing a rotation angle of an object in the 2D image includes: by clicking a rotate button, along a longitudinal coordinate of the 2D image, a round button therein is dragged to change a rotation angle of a selected object, or the rotation angle of the object is directly changed by inputting a value after one object is selected.

Preferably, the 2D image includes many categories (such as furniture, electric appliances, cabinets, tiles and the like), objects in each of the categories are displayed at one side of the single interface in a form of a subordinate menu of the category (for example, the subordinate menu of furniture is sofa, wardrobe, bed and the like, and the subordinate menu of sofa is single sofa, double sofa, corner sofa and the like).

Preferably, an object displayed at one side of the single interface is loaded in the 2D image by clicking for selection.

Preferably, in a state that the 2D image and the 3D image are simultaneously displayed on the same interface, the 2D image may be selectively closed, and only the 3D image is displayed on the same interface.

Preferably, various objects are displayed as blocks in the 2D image, and displayed as 3D models in the 3D image of the 2D image.

The method for displaying a 2D image and a 3D image of a same decoration scene simultaneously on a single interface of the present invention, as it suggests, realizes a solution that an operation based on the 2D interface is responded and presented immediately in the 3D interface, which is capable of timely and accurately presenting a desired three-dimensional effect by the designer in changing a flat layout, and then selecting more suitable flat operation according to the change of the three-dimensional effect. Accordingly, the difference of the designing method of the present invention from the conventional methods lies in that: in the conventional methods, furniture may only be accurately placed in a 2D interface, and the stereo effect needs to be adjusted in a 3D interface, which is complicated in operation and cannot be displayed intuitively, while in the present invention, it is realized that the operation would be performed in two interfaces may be completed in one page, therefore, it has a significant promotion value.

### BRIEF DESCRIPTION OF THE DRAWINGS

Figure 1 is a schematic view of an interface before an object is moved in realization of the object moved left and right through the method of the present invention;
Figure 2 is a schematic view of an interface after an object is moved in realization of the object moved left and right through the method of the present invention;
Figure 3 is a schematic view of an interface before an object is moved in realization of the object moved in the front and back direction through the method of the present invention;
Figure 4 is a schematic view of an interface after an object is moved in realization of the object moved in the front and back direction through the method of the present invention;
Figure 5 is a schematic view of an interface before an object is moved in realization of the object moved up and down through the method of the present invention;
Figure 6 is a schematic view of an interface after an object is moved in realization of the object moved up and down through the method of the present invention;
Figure 7 is a schematic view of an interface before adjustment in realization of adjustment of the height feature of an object through the method of the present invention;
Figure 8 is a schematic view of an interface after adjustment in realization of adjustment of the height feature of an object through the method of the present invention;
Figure 9 is a schematic view of an interface before rotation in realization of rotation operation of an object through the method of the present invention;
Figure 10 is a schematic view of an interface after rotation in realization of rotation operation of an object through the method of the present invention;
Figure 11 is a schematic view of an interface showing addition of a single object through the method of the present invention;
Figure 12 is a schematic view of an interface showing addition of an object beside existing furniture through the method of the present invention;
Figure 13 is a schematic view of an interface showing addition of an object over existing furniture through the method of the present invention;
Figure 14 is a schematic view of an interface showing addition of an object to an interlayer of existing furniture through the method of the present invention;
Figure 15 is a schematic view of an interface before deletion in deleting an object through the method of the present invention;
Figure 16 is a schematic view of an interface after deletion in deleting an object through the method of the present invention;
Figure 17 is a schematic view of an interface before filling in filling a blank position between cabinets through the method of the present invention;
Figure 18 is a schematic view of an interface after filling in filling a blank position between cabinets through the method of the present invention;
Figure 19 is a schematic view of an interface before adjustment in adjusting a height of a cabinet from the ground through the method of the present invention;
Figure 20 is a schematic view of an interface after adjustment in adjusting a height of a cabinet from the ground through the method of the present invention;
Figure 21 is a schematic view of an interface showing that a 2D prototype room is presented in a 3D stereo through the method of the present invention;
Figure 22 is a schematic view of an interface showing that wall tiles are directly paved through the method of the present invention;
Figure 23 is a schematic view of an interface showing that the wall tiles which have been cut are paved through the method of the present invention;
Figure 24 is a schematic view of an interface showing that the wall piles are paved after being unilaterally slotted through the method of the present invention;
Figure 25 is a schematic view of an interface showing that the wall piles are paved after being equal-divisionally slotted through the method of the present invention;
Figure 26 is a schematic view of an interface showing that wall tiles are paved after being upper chamfered and lower chamfered through the method of the present invention;
Figure 27 is a schematic view of an interface showing that modeling bricks are paved through the method of one embodiment of the present invention;
Figure 28 is a schematic view of an interface showing that modeling bricks are paved through the method of another embodiment of the present invention;
Figure 29 is a schematic view of an interface of paving wall tiles with combined tiles through the method of the present invention;
Figure 30 is a schematic view of an interface of paving wall tiles with bricks of cross banding line through the method of the present invention;
Figure 31 is a schematic view of an interface of paving parquet tiles through the method of the present invention; and
Figure 32 is a schematic view of an interface of modifying the color and size of the brick joint through the method of the present invention.

### DETAILED DESCRIPTION

Hereinafter, the present invention is further described in detail in conjunction with accompany drawings, to enable those skilled in the art to practice the invention with reference to the contents of the description.

A method for displaying a 2D image and a 3D image of a same decoration scene simultaneously on a single interface is provided by the present invention, including: when a decoration scene is displayed on an interface of an electronic display device, an operationally changeable 2D image is displayed, and a 3D image of the 2D image is displayed on the same interface, changed with the operational change of the 2D image. In other words, on a same display interface, a 2D image may be operated, and a 3D image achieved by the operation may be displayed in real time. For example, a user intends to change a position of furniture in a decoration scene, which may be operated through a 2D image, and then an effect thereof may be viewed in a 3D image. The detailed solution is discussed as follows.

In the method for displaying a 2D image and a 3D image of a same decoration scene simultaneously on a single interface provided by the present invention, in order to realize that the 2D image and the 3D image do not overlap with each other, preferably, the 2D image is a transparent image and located at a front side of the same interface, and the 3D image is a nontransparent image and located at a back side of the same interface, such that the 3D image is displayed by penetrating through the 2D image. By this way, when a user operates a 2D image, it will be presented in a 3D image in real time, so a three-dimensional effect after modification may be easily viewed in modifying the 2D image.

Specifically, the operational change of the 2D image mentioned in the above method includes the following three types of situations:

a first situation, changing an up-and-down distance, a left-and-right distance or a front-and-back distance between objects in the 2D image;

a second situation, changing a height, a width or a depth of an object in the 2D image;

a third situation, changing a rotation angle of an object in the 2D image.

After an operational change in any of the above three situations, the operational change may be displayed immediately in the corresponding 3D image.

### The first situation, changing an up-and-down distance, a left-and-right distance or a front-and-back distance between objects in the 2D image.

This situation corresponds to changing a position of an object in a decoration scene. That is, the method of changing an up-and-down distance, a left-and-right distance or a front-and-back distance between objects in the 2D image includes: by clicking a move button, along a longitudinal coordinate of the 2D image, a round button therein is dragged to change a position of a selected object, or the position of the object is directly changed by inputting a value after the object is selected.

In a specific implementation of the present invention, the reference to "along a longitudinal coordinate of the 2D image, a round button therein is dragged to change the position of the selected object" means, it is implemented by a plurality of operational buttons representing respective moving directions and gliding bars representing moving magnitudes in respective moving directions provided under the move button on the 2D designing interface, each of the operational buttons decides two opposite directions, such as "front-and-back", "left-and-right" or "up-and-down". A detailed discussion is given in conjunction with the accompany drawings as follows.

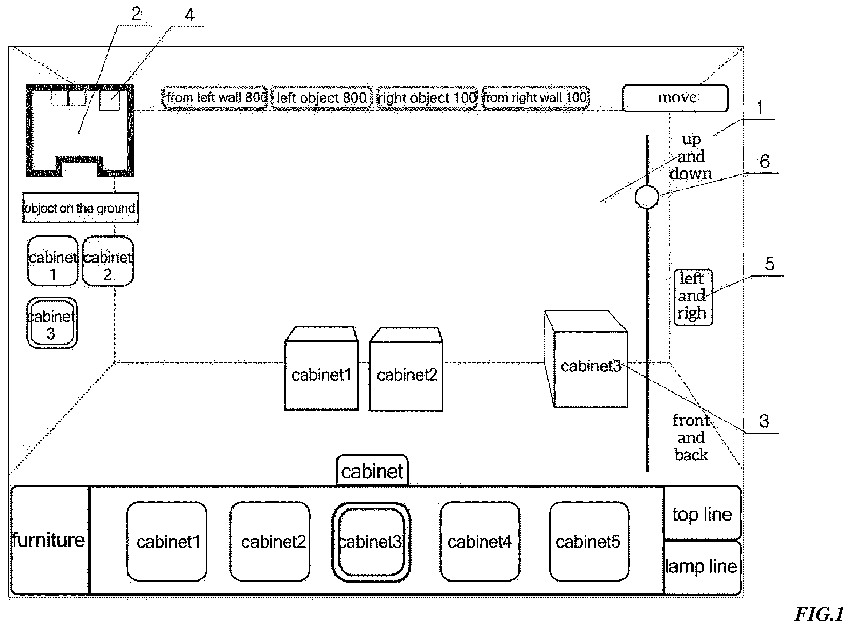

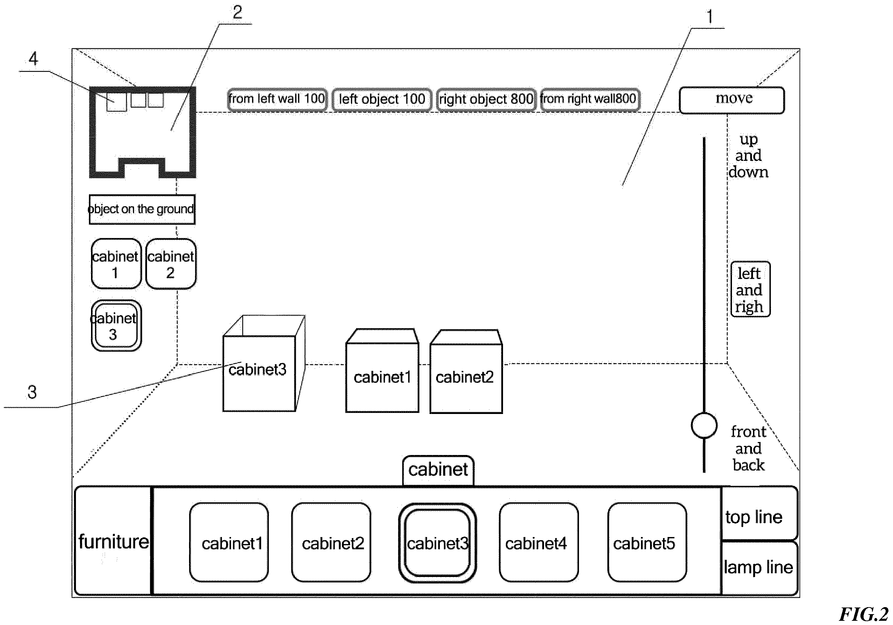

Referring to Figures 1 and 2, which are comparative schematic views of interfaces showing realization of an object moved left and right through the method of the present invention. As shown in Figure 1, a decoration scene 1 is displayed on an interface, an operationally changeable 2D image 2 is displayed at a left and upper corner of the decoration scene, on the 2D image three kinds of floor cabinets are displayed as blocks and represented with a numeral 4, and meanwhile, 3D models of the three kinds of floor cabinets in the 2D image are also displayed in the decoration scene and represented with a numeral 3. In the interface, an operational button 5 representing "front-and-back", "left-and-right" and "up-and-down" removing directions and the above mentioned gliding bar 6 are also provided. As shown in the Figures, the gliding bar is disposed on the longitudinal coordinate of the 2D image, a round button is provided thereon, and change of the positions of the objects may be achieved by gliding the round button.

When he desires to move an object left and right, the user may firstly select a block representing the object in the 2D image, then click the move button in the interface and select "left and right" moving, and by operating the gliding bar or up-and-down arrows (not shown in Figure 1) at both ends of the gliding bar or by directly inputting an accurate value, the object may be moved transversely in the 2D image. While in the 3D effect of the decoration scene, a moving of the object front and back in the space may be realized. As shown in the Figures, changing a position by inputting a value is easy and feasible. Accurate values of distances from a left wall, a right wall, a left object and a right object may be input to quickly realize a transverse moving of the object in the 2D image, and in turn, a left-and-right moving in the 3D effect of the decoration scene. It is apparent from comparison between Figure 1 and Figure 2 that, in this embodiment, the position of the cabinet 3 is adjusted, moving from proximity of the right wall as shown in Figure 1 to proximity of the left wall as shown in Figure 2. In the 2D images of the Figures 1 and 2, transverse moving (from right to left) of the cabinet 3 (4) is realized is moved, and correspondingly in the decoration scene 1, the 3D model 3 of the cabinet 3 is moved from proximity of the right wall to proximity of the left wall.

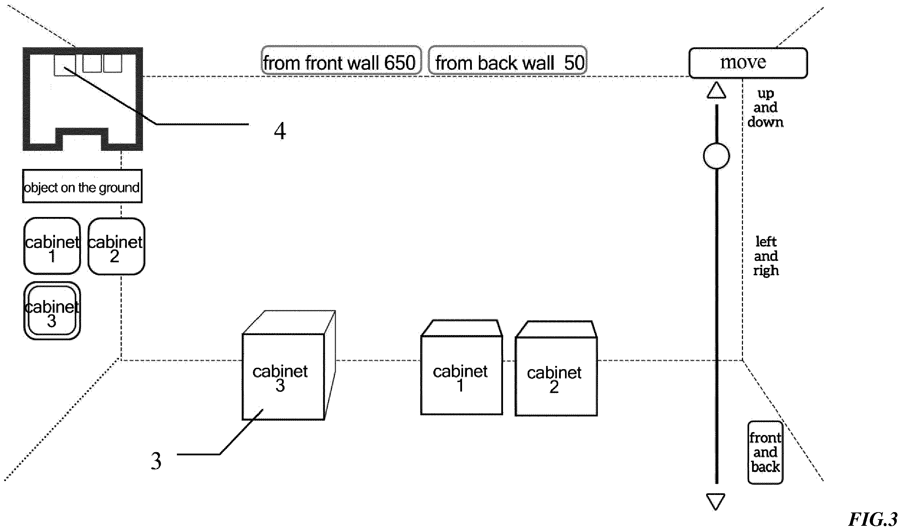

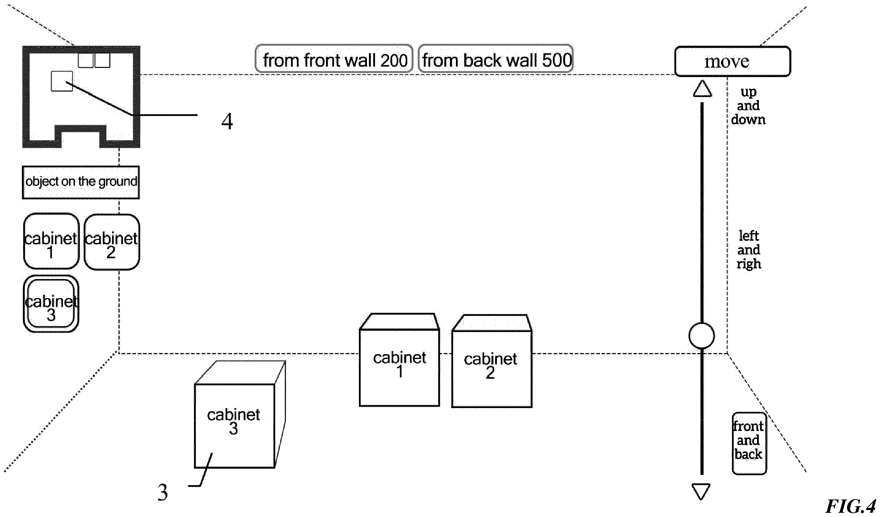

Referring to Figures 3 and 4, which are comparative schematic views of interfaces showing realization of an object moved in the front and back direction through the method of the present invention. When he desires to move an object front and back, the user may firstly select a block representing the object in the 2D image, then click the move button in the interface and select "front and back" moving, and by operating the gliding bar or up-and-down arrows at both ends of the gliding bar or by directly inputting an accurate value, the object may be moved longitudinally in the 2D image. While in the 3D effect of the decoration scene, a moving of the object front and back in the space may be realized. As shown in the Figures, the moving front and back of the object may also by quickly realized by inputting accurate values of the distances of the object from a front wall and a back wall. It is apparent from comparison between Figure 3 and Figure 4 that, in this embodiment, the position of the cabinet 3 is adjusted, moving from proximity of the back wall as shown in Figure 3 to proximity of the back wall as shown in Figure 4. In the 2D images of the Figures 3 and 4, longitudinal moving (from up and down) of the cabinet 3 (4) is realized is moved, and correspondingly in the decoration scene 1, the 3D model 3 of the cabinet 3 is moved from proximity of the back wall to proximity of the front wall.

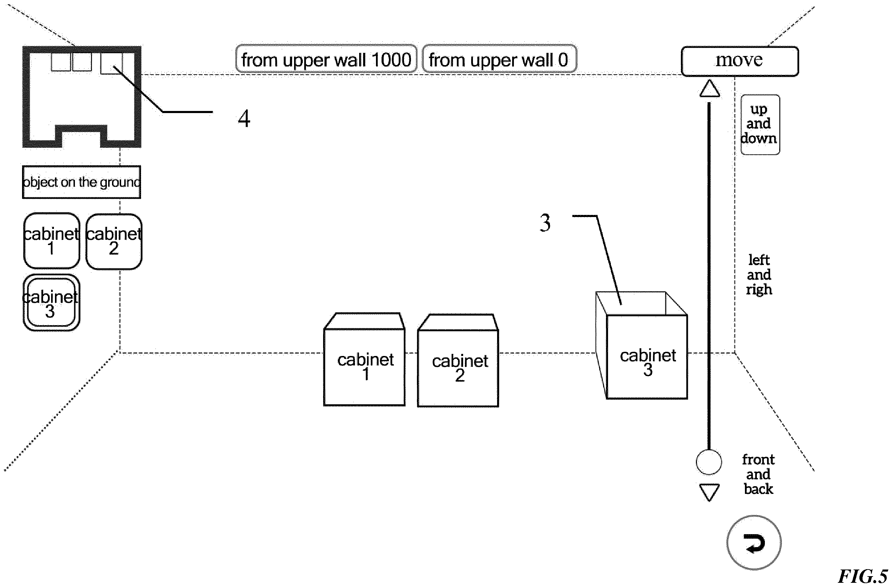

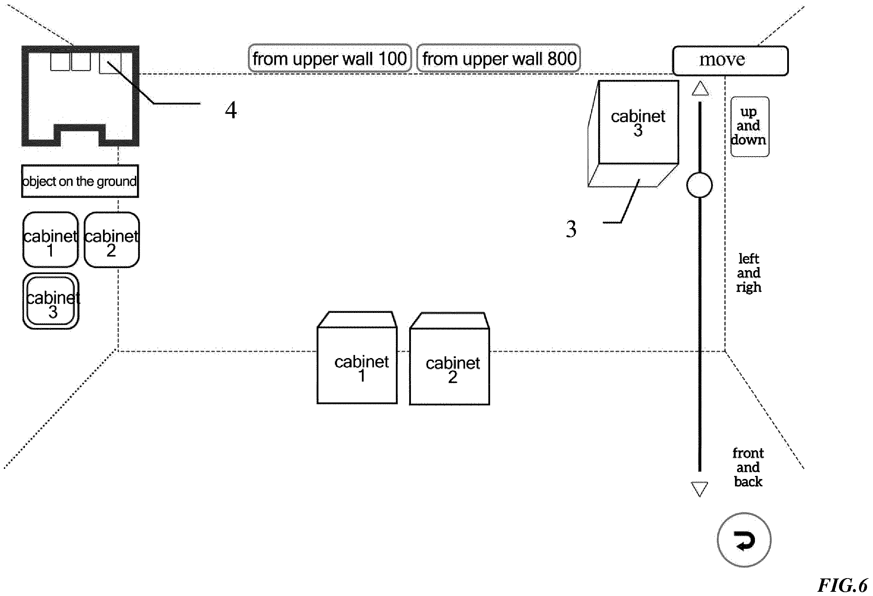

Referring to Figures 5 and 6, which are comparative schematic views of interfaces showing realization of an object moved up and down through the method of the present invention. When he desires to move an object up and down, i.e. adjustment in the height, the user may firstly select a block representing the object in the 2D image, then click the move button in the interface and select "up and down" moving, and by operating the gliding bar or up-and-down arrows at both ends of the gliding bar or by directly inputting an accurate value, the object may be moved up and down in the 3D space of the decoration scene (this cannot be displayed in the 2D image, and the displayed effect may only be seen from the 3D image). As shown in the Figures, the adjustment in the height of the object may also by quickly realized by inputting accurate values of the distances of the object from an upper wall and a lower wall. It is apparent from comparison between Figure 5 and Figure 6 that, in this embodiment, the position of the cabinet 3 is adjusted, moving from proximity of the lower wall as shown in Figure 5 to proximity of the upper wall as shown in Figure 6. Although the position of the cabinet 3 (4) is without any change in the 2D images of the Figures 5 and 6, in the decoration scene 1, the 3D model 3 of the cabinet 3 is moved from proximity of the lower wall to proximity of the upper wall.

### The second situation, changing a height, a width or a depth of an object in the 2D image.

The method of changing a height, a width or a depth of an object in the 2D image includes: by clicking a modify button, along a longitudinal coordinate of the 2D image, a round button therein is dragged to change a size of a selected object, or the size of the object is directly changed by inputting a value after one object or some objects are selected.

In a specific implementation of the present invention, the reference to "along a longitudinal coordinate of the 2D image, a round button therein is dragged to change the size of the selected object" means, it is implemented by three operational buttons respectively representing "height", "width" and "depth" features of the operable object and gliding bars representing the changing magnitudes in these features provided on the 2D designing interface. Likewise, the gliding bar is disposed on the longitudinal coordinate of the 2D image, and a round button which is glided to change the size feature of the object is provided thereon.

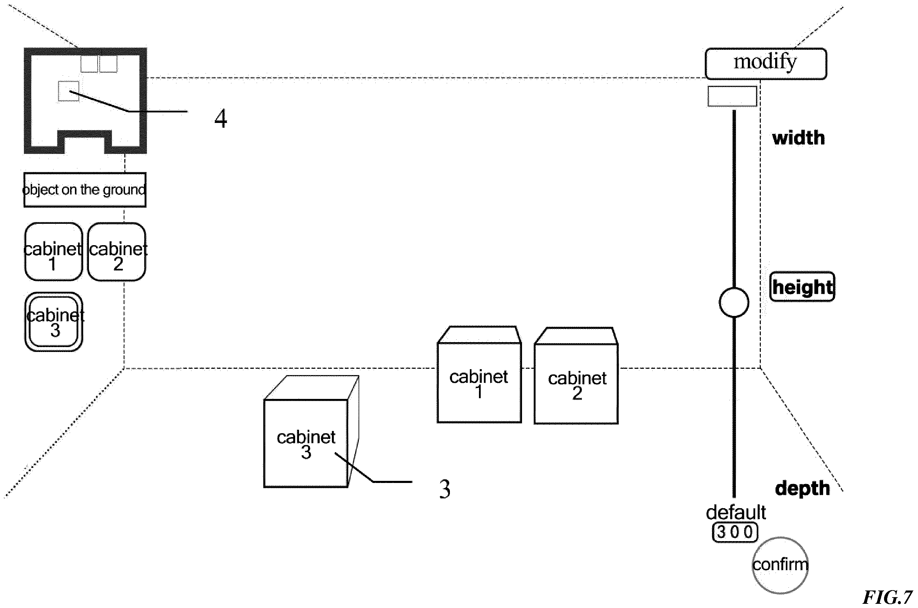

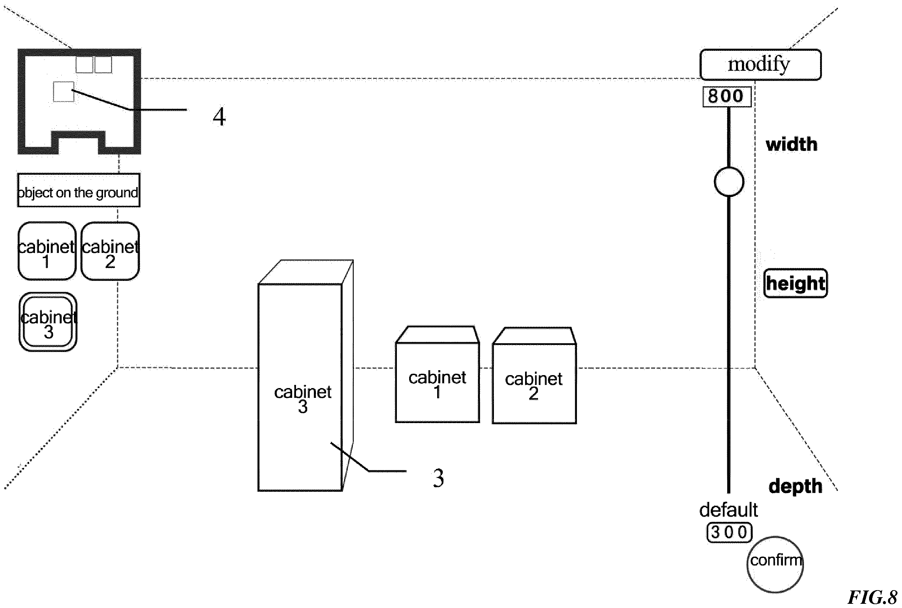

Referring to Figures 7 and 8, which are comparative schematic views of interfaces showing realization of adjustment of the height feature of an object through the method of the present invention. When he desires to adjust the height feature of an object, the user may firstly select a block representing the object in the 2D image, then click the modify button in the interface and select the "height" feature button, and by operating the gliding bar or by directly inputting an accurate size, the height of the object may be adjusted. This cannot be displayed in the 2D image, but a 3D model of the object after adjustment of the height may be seen from the 3D effect of the decoration scene. It is apparent from comparison between Figure 7 and Figure 8 that, in this embodiment, the height of the cabinet 3 is adjusted, from a height of 300 as shown in Figure 7 to a height of 800 as shown in Figure 8. Although the cabinet 3 (4) is without any change in the 2D images of the Figures 7 and 8, in the decoration scene 1, a change in the height (getting higher) of the 3D model 3 of the cabinet 3 is actually realized.

In the present invention, the adjustment in the size of an object also includes an accurate adjustment by inputting a size to be adjusted to through the 2D designing interface, after an object to be adjusted is selected directly in the 2D image.

### The third situation, changing a rotation angle of an object in the 2D image.

The method of changing a rotation angle of an object in the 2D image includes: by clicking a rotate button, along a longitudinal coordinate of the 2D image, a round button therein is dragged to change a rotation angle of a selected object, or the rotation angle of the object is directly changed by inputting a value after one object is selected.

In a specific implementation of the present invention, the reference to "along a longitudinal coordinate of the 2D image, a round button therein is dragged to change the rotation angle of the selected object" means, it is implemented by two operational buttons respectively representing "rotating to left" and "rotating to right" of the operable object and gliding bars representing the degrees of the rotation angles and the magnitudes of the adjustment provided on the 2D designing interface. Likewise, the gliding bar is disposed on the longitudinal coordinate of the 2D image, and a round button which is glided to change the degree of the rotation angle of the object is provided thereon.

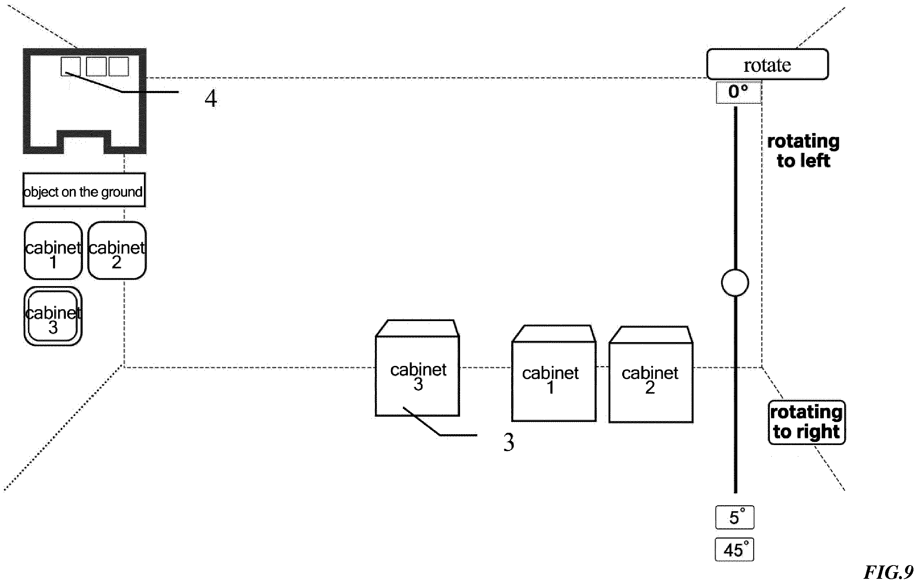

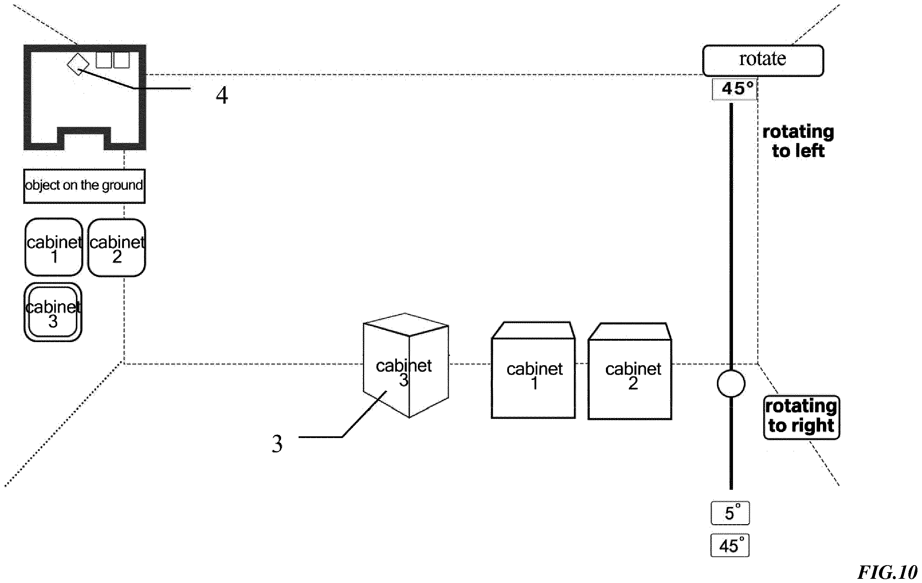

Referring to Figures 9 and 10, which are comparative schematic views of interfaces showing realization of rotation operation of an object through the method of the present invention. When he desires a rotate operation of an object, the user may firstly select a block representing the object in the 2D image, then click the rotate button in the interface and correspondingly select the "rotating to left" button or the "rotating to right" button in the interface, and by operating the gliding bar or the degree buttons at both ends of the gliding bar or by directly inputting an accurate degree of a rotation angle, the object may be turned both transversely or longitudinally (i.e. rotated) in the 2D image. While in the 3D effect of the decoration scene, the rotation operation of the object may be realized in the space, to present the stereo effect after the rotation. For the above operational gliding bar, the more is the span of the gliding, the more is the magnitude of the moving. For the rotation operation, the more is the span of the gliding of the gliding bar, the more is the degree of the rotation angle. It is apparent from comparison between Figure 9 and Figure 10 that, in this embodiment, the position of the cabinet 3 is adjusted, from right against the wall as shown in Figure 9 to rotation to right for 45 degree, as shown in Figure 10. In the 2D images of the Figures 9 and 10, the cabinet 3 (4) is rotated both transversely and longitudinally, but in the decoration scene 1, rotation to right for 45 degree of the 3D model 3 of the cabinet 3 is realized.

Preferably, in the present invention, the 2D image includes many categories (such as furniture, electric appliances, cabinets, tiles and the like), objects in each of the categories are displayed at one side of the single interface in a form of a subordinate menu of the category (for example, the subordinate menu of furniture is sofa, wardrobe, bed and the like, and the subordinate menu of sofa is single sofa, double sofa, corner sofa and the like). Preferably, an object displayed at one side of the single interface may be loaded in the 2D image by clicking for selection. For example, the 2D image includes a coffee table, a chair and a potted plant which are displayed in the single interface as belonging to three categories. The coffee table further includes many types, such as glass type, wooden type, glass and wooden made type which appear in the subordinate menu of the coffee table and are displayed at one side of the single interface. The user may select to add his favorite types and add them in.

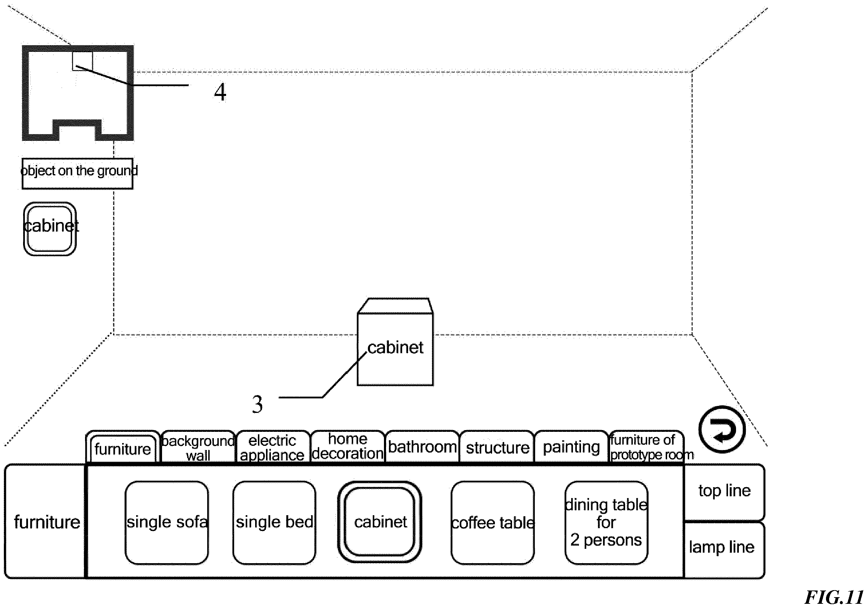

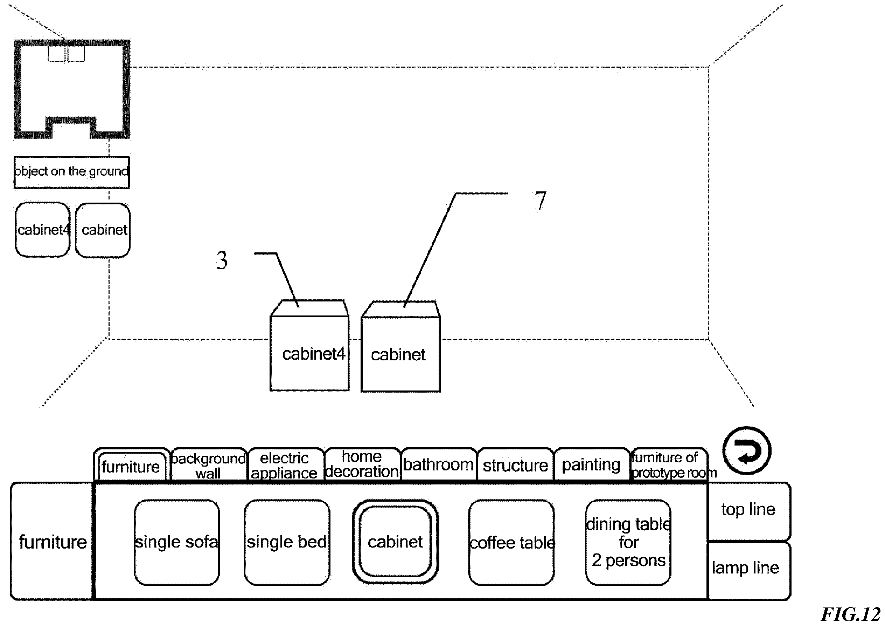

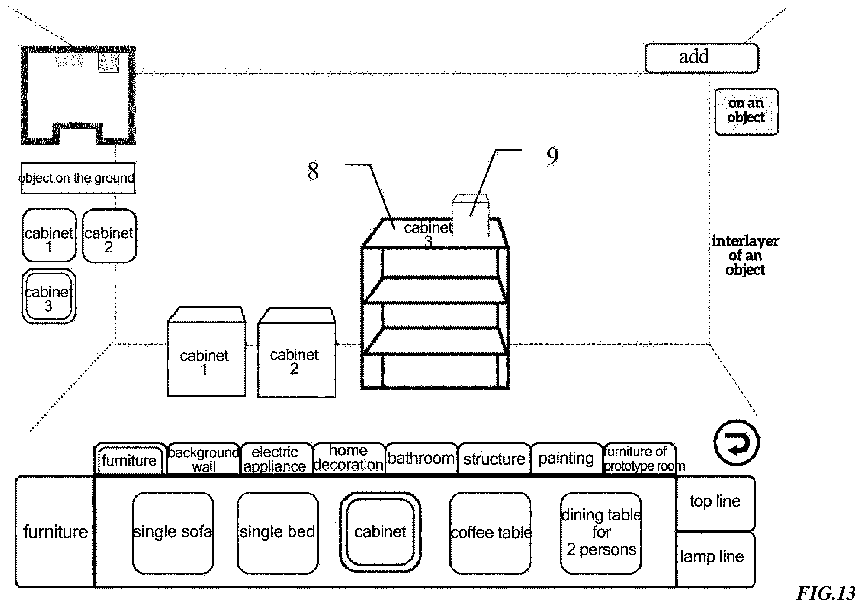

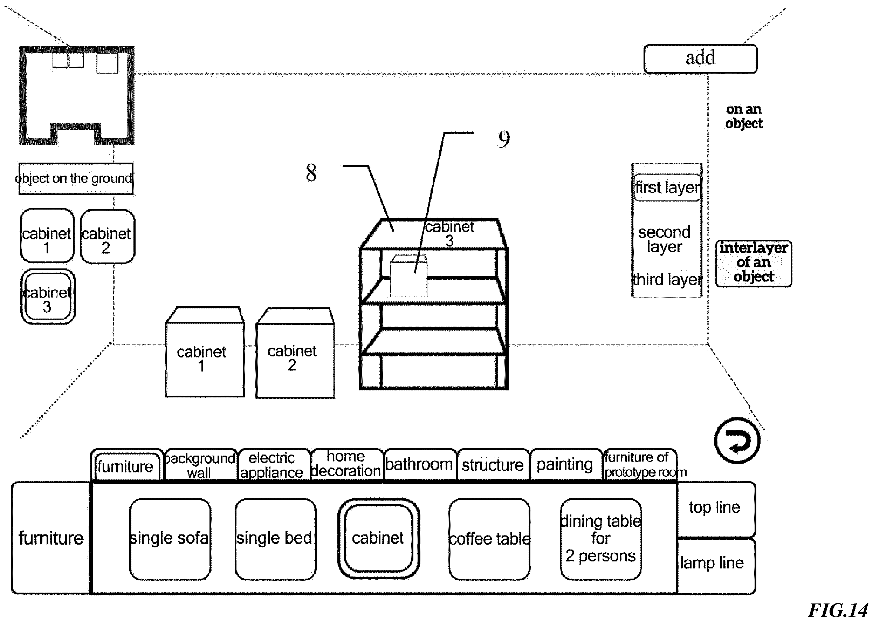

Referring to Figure 11, which is a schematic view of an interface showing addition of a single object through the method of the present invention. As shown in the Figure, the user selects the category of furniture, and selects an object of a cabinet from the subordinate menu of this category. At this time, the selected cabinet is added into the 2D image in a form of a block represented with a numeral 4 by clicking the addition button, and is displayed in the decoration scene in a form of a 3D model 3. Meanwhile, other objects may be added beside or over existing furniture in the decoration scene, as shown in Figures 12 and 13. Wherein, in Figure 12, a cabinet 4 (3) is added to the right side of existing furniture 7, while in Figure 13, an accessory 9 is added over existing furniture 8. When an object is added to the existing furniture, a position for the addition may be selected. For example, Figure 14 is a schematic view of an interface showing that the accessory 9 is added to an interlayer of the existing furniture 8.

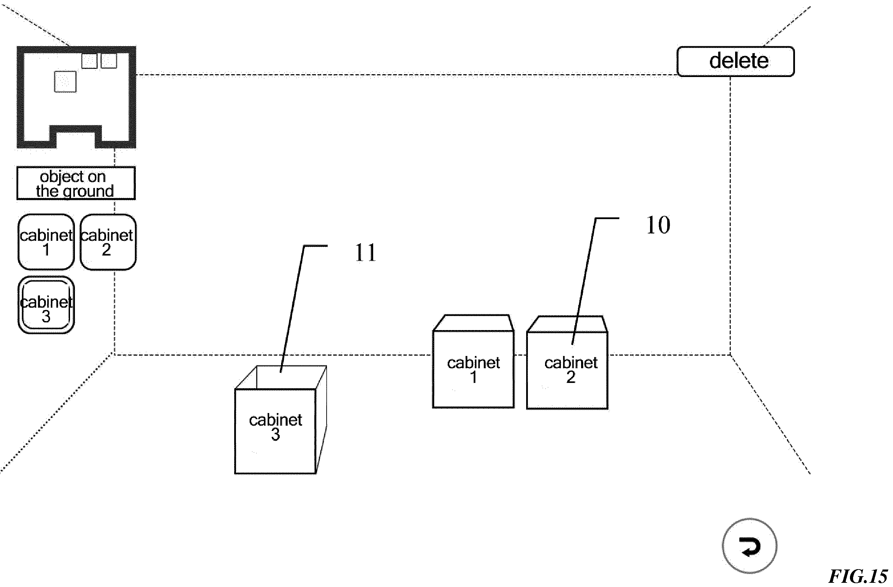

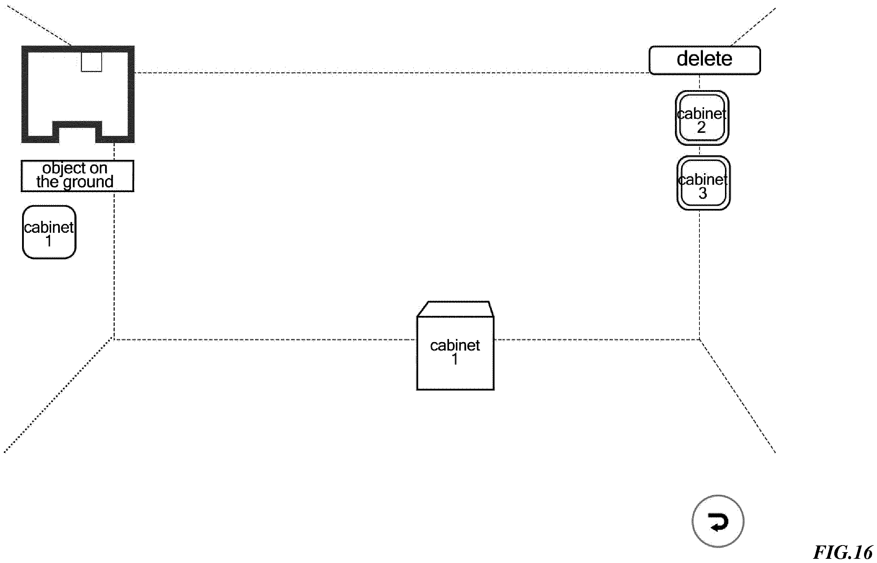

In the present invention, operational changes to the 2D image include "deleting" an object, in addition to "adding" an object. That is, the user may delete an undesired object in the 2D interface according to his preference, and then view a stereo effect after the deletion from the decoration scene. Referring to Figures 15 and 16, a cabinet 2 (10) and a cabinet 3 (11) in the decoration scene are deleted through the 2D interface.

In order to facilitate the user viewing the 3D stereo effect, preferably in the method for displaying a 2D image and a 3D image of a same decoration scene simultaneously on a single interface of the present invention, in a state that the 2D image and the 3D image are simultaneously displayed on the same interface, the 2D image may be selectively closed, and only the 3D image is displayed on the same interface. Meanwhile, it is apparent from the above that, in the present invention, various objects are displayed as blocks in the 2D image, and displayed as 3D models in the 3D image of the 2D image.

Next, some specific embodiments are given in conjunction with the accompany drawings to describe the method of the present invention.

The first embodiment: filling a blank position between cabinets.

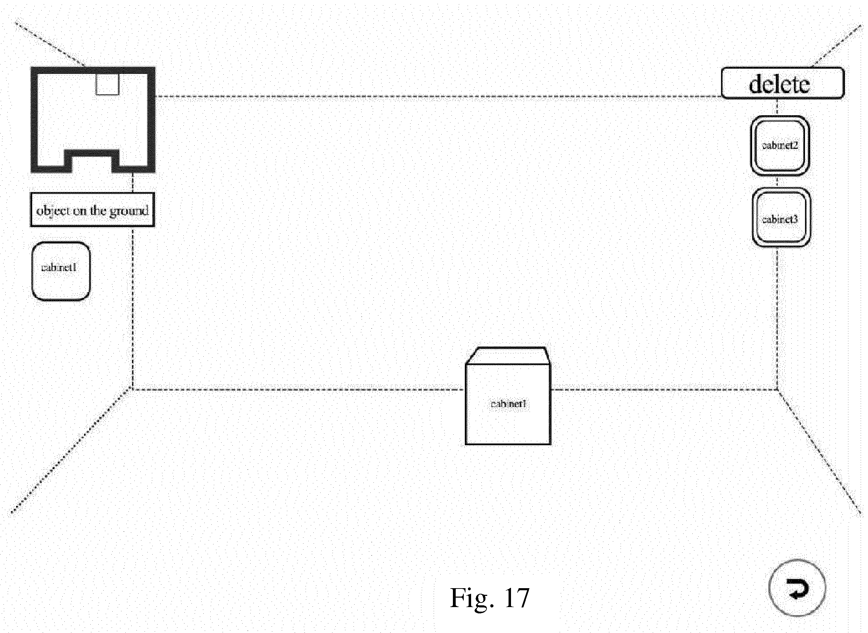

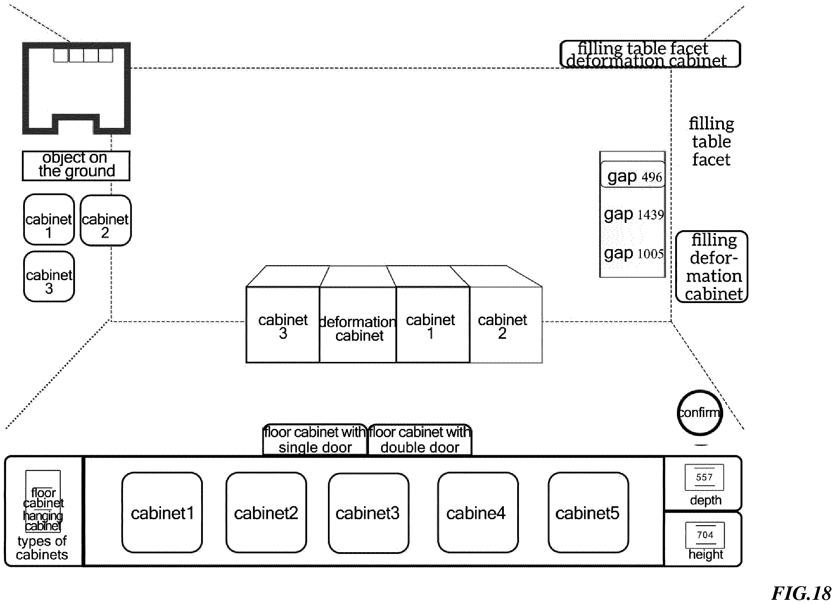

Referring to Figures 17 and 18, which are comparative schematic views of interfaces showing that a blank position between cabinets is filled through the method of the present invention. There is a blank between the cabinet 3 and cabinet 1 in Figure 17 have s, while in Figure 18, filling of the blank is realized by filling a deformation cabinet, and the change may be seen from both the 2D image and the 3D model. A size of the gap may be selected for the deformation cabinet. It is shown in the interface that in addition to filling a deformation cabinet, a table facet may also be filled.

The second embodiment: adjusting a height of a cabinet from the ground and a displacement distance up and down.

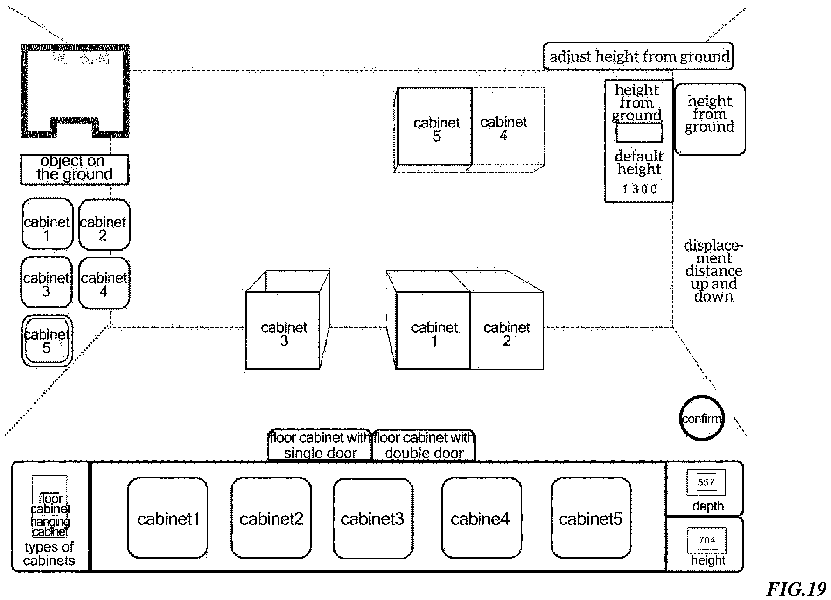

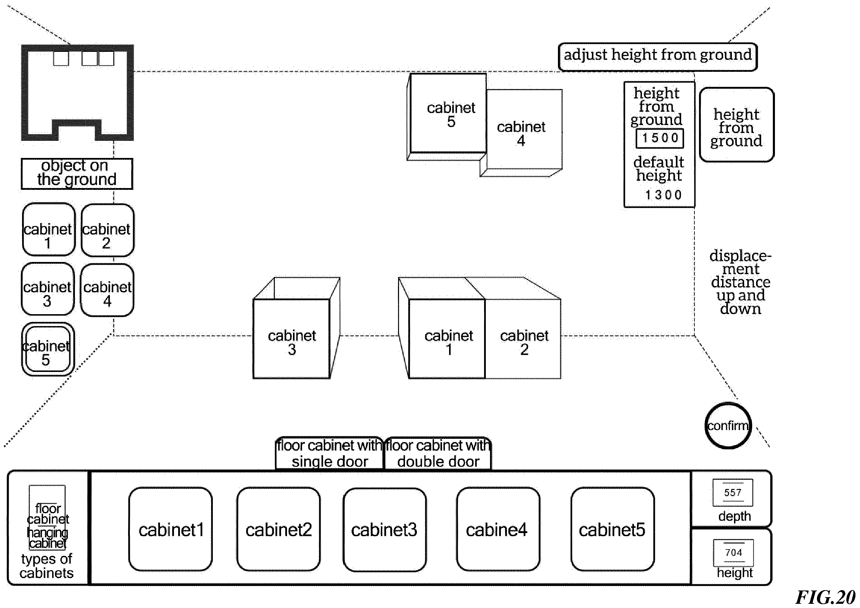

Referring to Figures 19 and 20, which are comparative schematic views of interfaces showing that a height of a cabinet from the ground is adjusted through the method of the present invention. In Figure 19, a height of a cabinet 5 from the ground is 1300 in default, and becomes 1500 after adjustment in the 2D interface. Although there is not any change in the 2D images shown in Figures 19 and 20, the stereo effect is actually adjusted in the decoration scene. It is shown in the interface that in addition to adjustment to the height of the cabinet from the ground, a displacement distance up and down may also be adjusted.

The third embodiment: presenting a 2D prototype room in a 3D stereo.

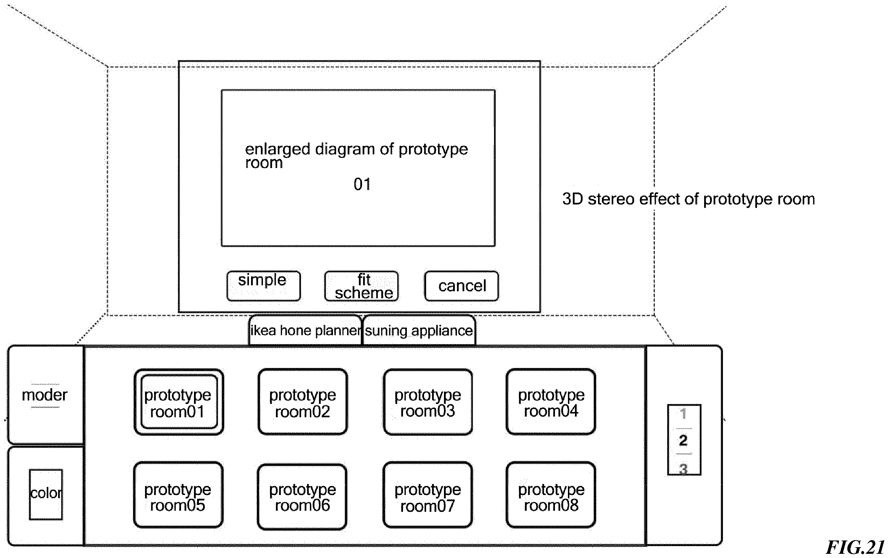

Referring to Figure 21, which is a schematic view of an interface showing that a 2D prototype room is presented in a 3D stereo through the method of the present invention. As shown in the Figure, the user may select a desired fashion from various fashions of prototype rooms, and the selected design fashion is displayed as an enlarged diagram in the 2D image, and displayed in the decoration in a form of a 3D stereo effect at the back of the 2D image through computer description language and formulas of functions.

The fourth embodiment: presenting a paving scheme of patterns of piles or marbles in 3D.

Whether the decoration scene is a residence, a restaurant or a bar, in pursuit of beauty, different design fashions of piles are provided to improve aesthetic feelings. The user may load favorite piles in the 2D image. Although the 2D image with the loaded piles may not be displayed (therefore, in the following specific introduction of accompany drawings, the 2D image is not involved, and may be closed), they may be viewed as stereo effects only in the 3D image.

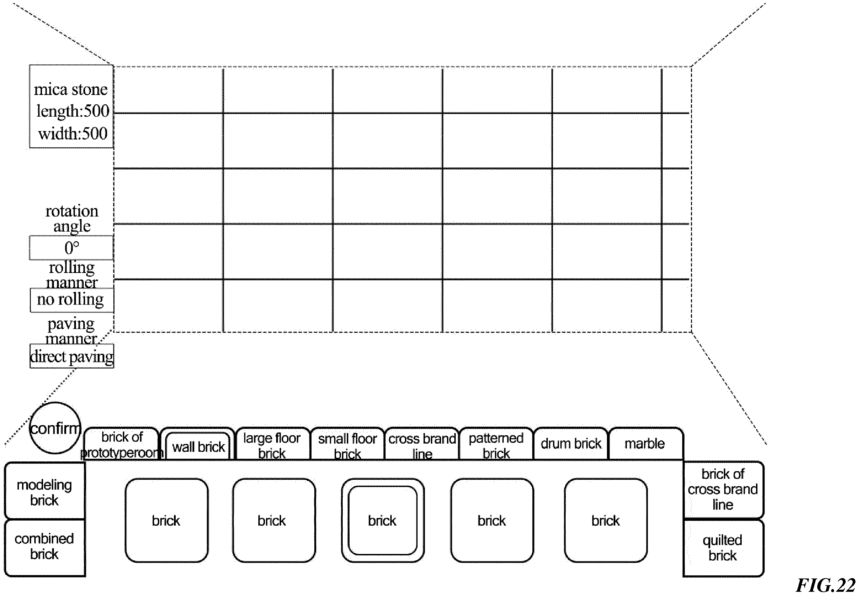

Specifically, if a user A selects a wall tile of a mica stone with a size of 800*400 in the 2D interface, he may selects to pave the wall tiles directly, or he may selects to rotate them by 90 degree or other degree and then pave them. Referring to Figure 22, which is a schematic view of an interface showing that wall tiles are directly paved through the method of the present invention. The user may view a stereo effect of direct paving from the 3D scene.

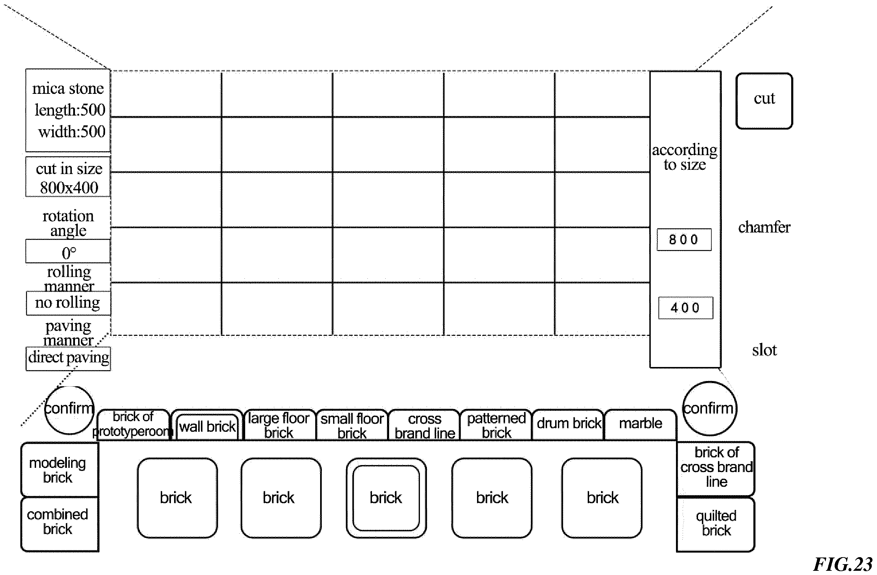

If the user A selects a wall tile of a mica stone with a size of 800*800 in the 2D interface, and the wall tiles need to be cut, and the user desires to view whether the stereo effect after it is cut to a size of 800*400 is better, he may select a cut button in the 2D interface, and input a size to be cut to, and then he may view the stereo effect after the wall tiles which have been cut are paved in the 3D scene, as shown in Figure 23.

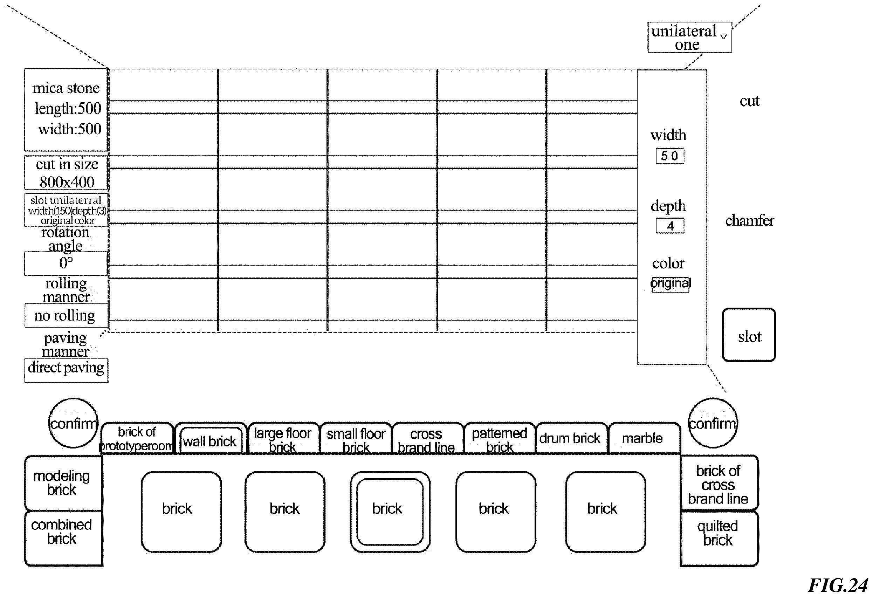

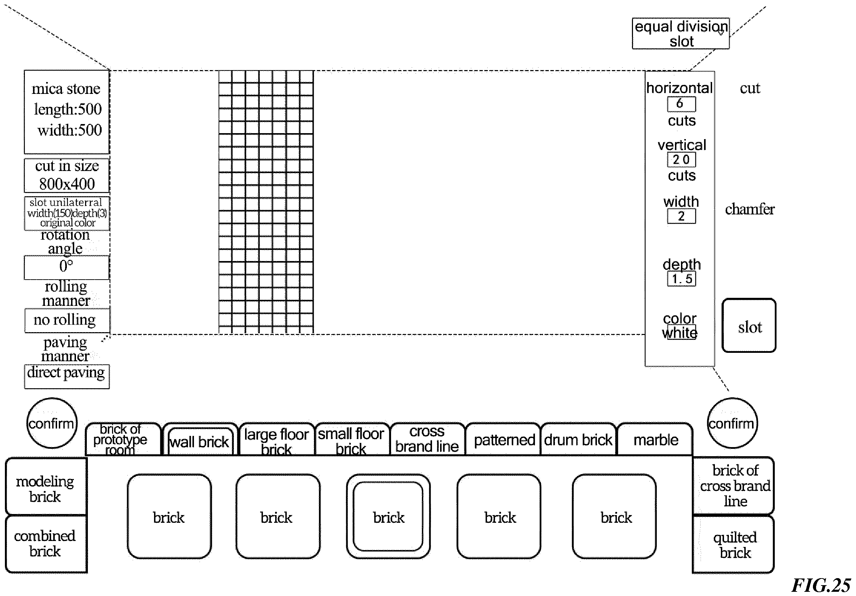

Based on the cut, the user may also slot the wall tile by various manners in the 2D interface, and view the stereo effect after the wall tiles which have been slotted are paved in the decoration scene. The slotting may be unilateral slotting, and may also be an equal division slotting. A width, depth and color of the slots all may be modified. Referring to Figures 24 and 25, which are schematic views of interfaces respectively showing that the wall piles are paved after being unilaterally slotted and equal-divisionally slotted through the method of the present invention.

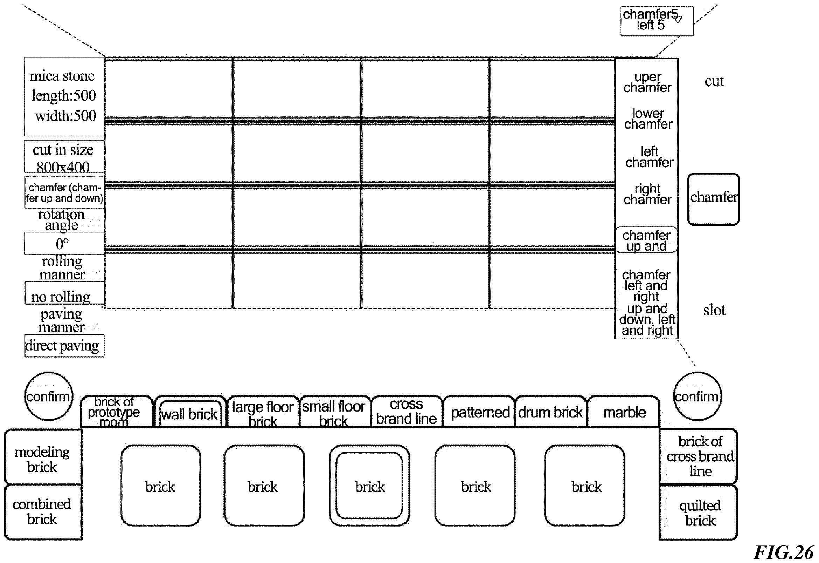

Further, the user may perform chamfering design to a wall tile in the 2D interface. The chamfering may be in all direction, including upper chamfering, lower chamfering, left chamfering and right chamfering, etc. Figure 26 is a schematic view of an interface showing that wall tiles are paved after being upper chamfered and lower chamfered through the method of the present invention.

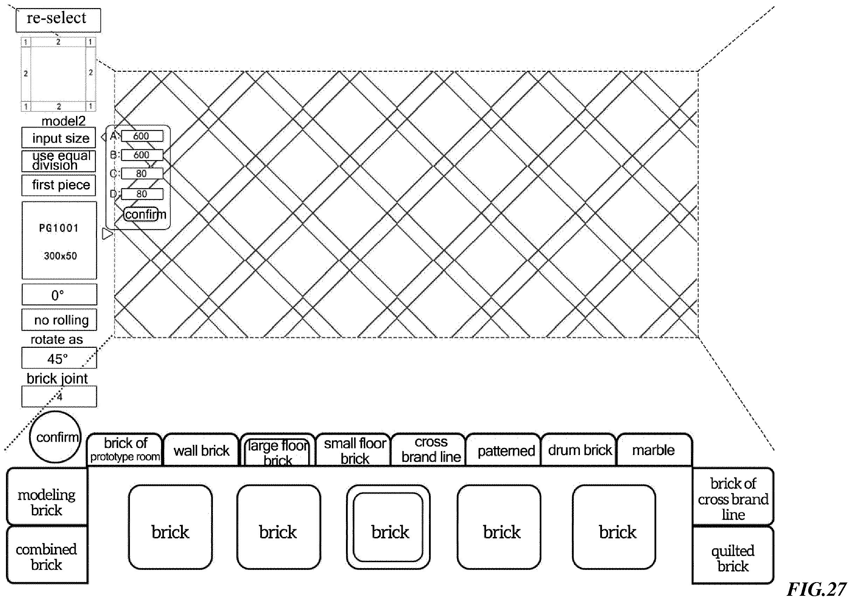

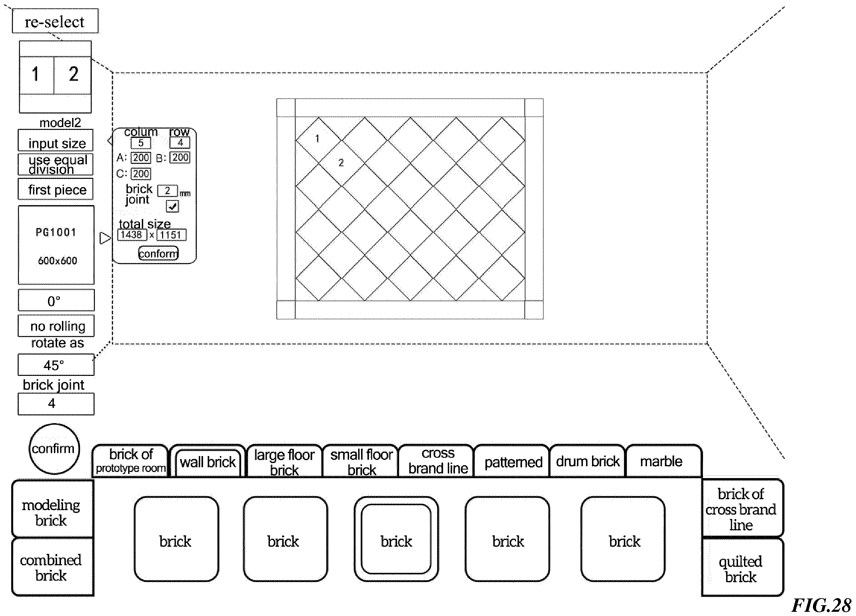

In addition to the effect of direct paving mentioned above, paving schemes of piles of various patterns may be seen, as shown in Figures 27 and 28, which are schematic views of interfaces showing two patterns of paving of wall tiles through the method of the present invention, the patterns are quilted type. By selecting a desired tile in the 2D interface and modifying the corresponding pattern design, it may be displayed in stereo in the decoration scene.

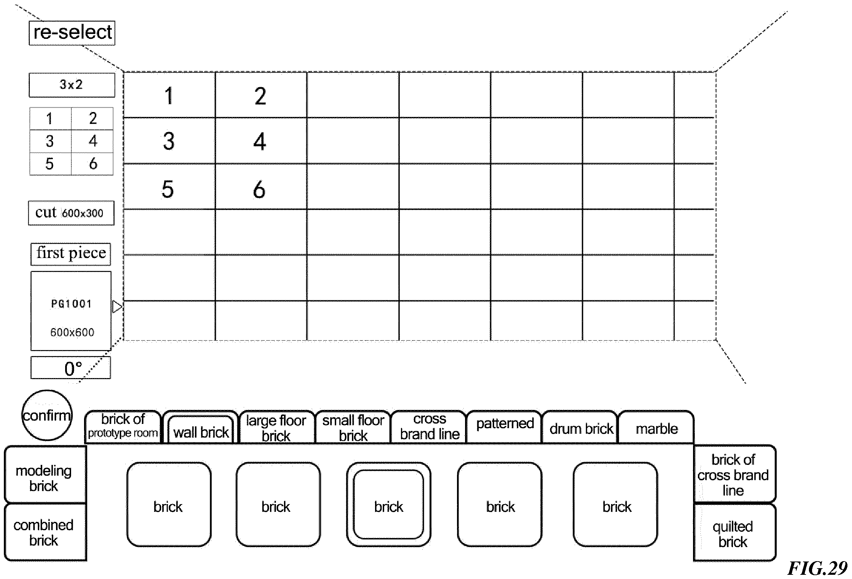

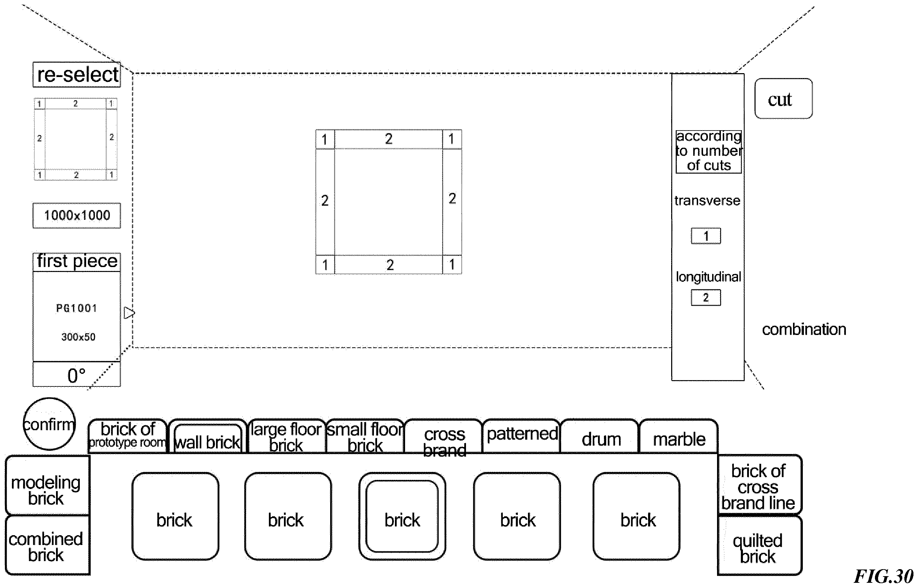

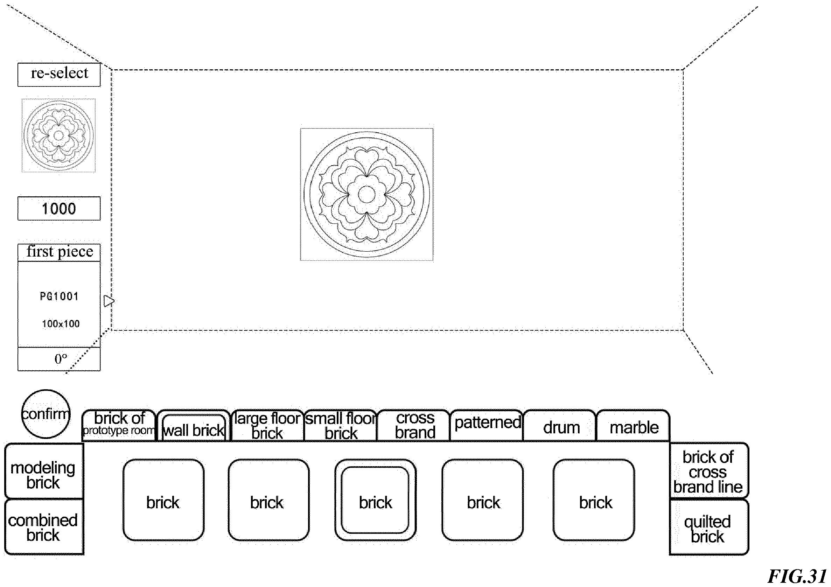

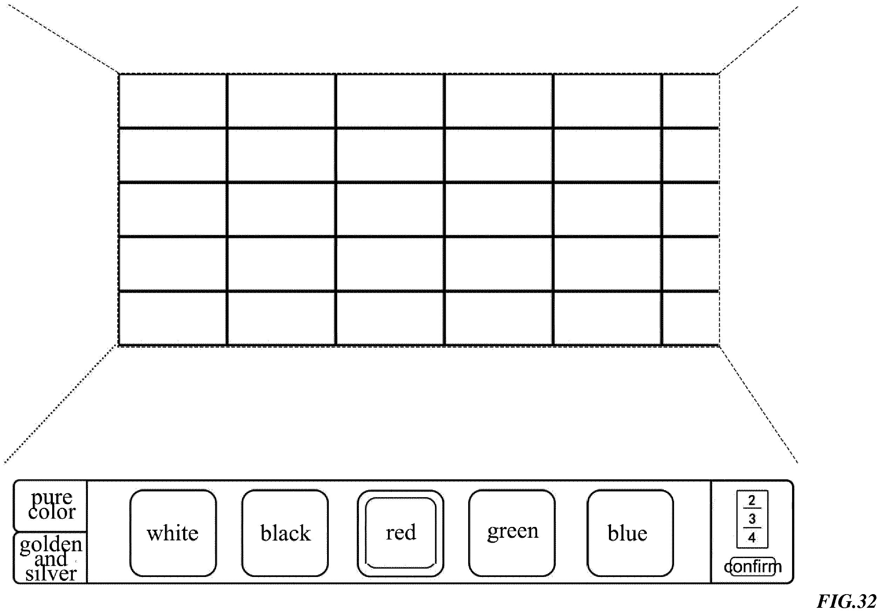

In the present invention, the paving of the tiles also include paving and displaying of combined tiles, bricks of cross banding line, parquet tiles and modifying and displaying of the color and size of the brick joint. Accordingly, the operation and design of the 2D interface provided by the present invention is particularly comprehensive, and suit for users with different preferences to display different stereo effects. As for the paving and displaying of combined tiles, the user only needs to select more than two types of tiles to be combined in the 2D interface, and select a combining manner preset by the system, and then it may be displayed in stereo in the decoration scene, as shown in Figure 29. As for the paving and displaying of bricks of cross banding line, the user only needs to select a bricks of cross banding line template recorded in the system in the 2D interface, and modifying the template till it is desirable, and then it may be displayed in stereo in the decoration scene, as shown in Figure 30. Similarly, as for the paving and displaying of parquet tiles, the user only needs to select one among the parquet pattern templates recorded in the system in the 2D interface, and then it may be displayed in stereo in the decoration scene, as shown in Figure 31. Similarly, as for the modifying and displaying of the color and size of the brick joint, the user only needs to perform corresponding selection in the 2D interface, and then it may be displayed in stereo in the decoration scene, as shown in Figure 32.

Although the embodiments of the present invention have been disclosed as above, they are not limited merely to those set forth in the description and the embodiments, and they may be applied to various fields suitable for the present invention. For those skilled in the art, other modifications may be easily modified realized without departing from the general concept defined by the claims and their equivalents, and the present invention does not limit to the particular details and drawings illustrated and described herein.

## Claims

1. A method for displaying a 2D image and a 3D image of a same decoration scene simultaneously on a single interface, comprising:
when a decoration scene is displayed on an interface of an electronic display device, an operationally changeable 2D image is displayed, and a 3D image of the 2D image is displayed on the same interface, changed with an operational change of the 2D image.

2. The method for displaying a 2D image and a 3D image of a same decoration scene simultaneously on a single interface of claim 1, wherein:
the 2D image is a transparent image and located at a front side of the same interface, and the 3D image is a nontransparent image and located at a back side of the same interface, such that the 3D image is displayed by penetrating through the 2D image.

3. The method for displaying a 2D image and a 3D image of a same decoration scene simultaneously on a single interface of claim 2, wherein:
the operational change of the 2D image mentioned in the above method comprises: changing an up-and-down distance, a left-and-right distance or a front-and-back distance between objects in the 2D image; changing a height, a width or a depth of an object in the 2D image; changing a rotation angle of an object in the 2D image, and then the operational change may be displayed immediately in the corresponding 3D image.

4. The method for displaying a 2D image and a 3D image of a same decoration scene simultaneously on a single interface of claim 3, wherein:
the method of changing an up-and-down distance, a left-and-right distance or a front-and-back distance between objects in the 2D image comprises: by clicking a move button, along a longitudinal coordinate of the 2D image, a round button therein is dragged to change a position of a selected object, or the position of the object is directly changed by inputting a value after the object is selected;
the method of changing a height, a width or a depth of an object in the 2D image comprises: by clicking a modify button, along a longitudinal coordinate of the 2D image, a round button therein is dragged to change a size of a selected object, or the size of the object is directly changed by inputting a value after one object or some objects are selected; and
the method of changing a rotation angle of an object in the 2D image comprises:
by clicking a rotate button, along a longitudinal coordinate of the 2D image, a round button therein is dragged to change a rotation angle of a selected object, or the rotation angle of the object is directly changed by inputting a value after one object is selected.

5. The method for displaying a 2D image and a 3D image of a same decoration scene simultaneously on a single interface of claim 4, wherein:
the 2D image comprises many categories, objects in each of the categories are displayed at one side of the single interface in a form of a subordinate menu of the category.

6. The method for displaying a 2D image and a 3D image of a same decoration scene simultaneously on a single interface of claim 5, wherein:
an object displayed at one side of the single interface is loaded in the 2D image by clicking for selection.

7. The method for displaying a 2D image and a 3D image of a same decoration scene simultaneously on a single interface of claim 6, wherein:
in a state that the 2D image and the 3D image are simultaneously displayed on the same interface, the 2D image may be selectively closed, and only the 3D image is displayed on the same interface.

8. The method for displaying a 2D image and a 3D image of a same decoration scene simultaneously on a single interface of claim 7, wherein:
various objects are displayed as blocks in the 2D image, and displayed as 3D models in the 3D image of the 2D image.
